# EUROPEAN PATENT SPECIFICATION

(11) **EP 3 785 952 B1**
(45) Date of publication and mention of the grant of the patent: **19.10.2022**
(21) Application number: 20193337.1
(22) Date of filing: 28.08.2020
(51) Int. Cl.: B60H 1/00, B64D 13/00

(54) **CABIN THERMAL MANAGEMENT SYSTEM**
KABINENWÄRMEVERWALTUNGSSYSTEM
SYSTÈME DE GESTION THERMIQUE DE CABINE

(30) Priority: 30.08.2019 US 201916556965
(43) Date of publication of application: 03.03.2021
(73) Proprietor: Textron Innovations Inc., Providence, Rhode Island 02903 (US)
(72) Inventor: HEIRONIMUS, William Kyle, Fort Worth, TX 76101 (US)
(74) Representative: Barker Brettell LLP

(56) References cited:
- WO-A1-2018/198581
- WO-A2-2012/069052
- US-A1- 2011 240 795
- US-A1- 2016 107 502

## Description

### BACKGROUND

This section is intended to provide background information to facilitate a better understanding of various technologies described herein. As the section's title implies, this is a discussion of related art. That such art is related in no way implies that it is prior art. The related art may or may not be prior art. It should therefore be understood that the statements in this section are to be read in this light, and not as admissions of prior art.

Some aircraft, such as helicopters and other rotorcraft, have traditionally utilized petroleum-based fuels to power internal combustion engines for propulsion. However, the use of such aircraft may not always be desirable for a number of reasons, such as relatively higher costs for production, maintenance and training, a relatively high risk of failure during operation, noise, and emissions.

To mitigate one or more of these issues, some electric aircraft, such as helicopters or other rotorcraft, may use one or more battery packs to power electric propulsion systems and other onboard electric components. These battery packs, though, may be relatively large in terms of weight and/or size, particularly when compared to battery packs used on aircraft utilizing petroleum-based fuels to power internal combustion engines. The weight and size of the larger battery packs can impact the overall energy efficiency of the aircraft and may also limit the available space onboard the aircraft.

WO2012/069052 describes a thermal energy administration system for an electrical vehicle comprising an electrical motor for propelling the vehicle, comprising a heat pump air conditioning system which is arranged to heat one or more heat requiring units, and/or to cool one or more cooling requiring units, wherein at least one of the heat requiring unit(s) and the cooling requiring unit(s) is an electrical device of the electrical vehicle.

### SUMMARY

Described herein are examples of various technologies relating to a cabin thermal management system. In one embodiment, an aircraft includes a passenger cabin configured to transport one or more passengers. The aircraft also includes a battery pack configured to power one or more electronic components of the aircraft. The aircraft further includes a cabin thermal management system configured to regulate a cabin temperature of the passenger cabin by transferring thermal energy from the battery pack to the passenger cabin, comprising the features according to claim 1.

In another embodiment comprising the features according to claim 10, a method includes receiving a first temperature measurement from a cabin temperature sensor disposed in or proximate to a passenger cabin of an aircraft, where the cabin temperature sensor is configured to measure a cabin temperature of the passenger cabin. The method also includes receiving a first temperature measurement from a battery temperature sensor disposed in or proximate to a battery pack of the aircraft, where the battery temperature sensor is configured to measure a battery temperature of the battery pack. The method further includes comparing the first temperature measurement from the cabin temperature sensor with the first temperature measurement from the battery temperature sensor. The method additionally includes, based on the comparison, using a cabin thermal management system to regulate the cabin temperature by transferring thermal energy from the battery pack to the passenger cabin. The method further includes diverting the fluid toward a heat exchanger if a first temperature measurement by the battery temperature sensor is lower than a first temperature measurement by the cabin temperature sensor, and cooling the passenger cabin using a supplemental heating, ventilation, and air conditioning system if the second temperature measurement by the battery temperature sensor is higher than or equal to the second temperature measurement by the cabin temperature sensor.

The cabin thermal management system may include a thermal loop coupled to one or more channels of the battery pack, where the thermal loop is configured to allow fluid from the one or more channels to circulate therein. The cabin thermal management system may also include a heat exchanger coupled to the thermal loop, wherein the heat exchanger is disposed in or proximate to the passenger cabin and is configured to transfer the thermal energy between the battery pack and the passenger cabin.

The cabin thermal management system further comprises a valve coupled to the thermal loop, wherein the valve is configured to divert the fluid toward or away from the heat exchanger if a first temperature measurement by a battery temperature sensor is lower than a first temperature measurement by a cabin temperature sensor, wherein the valve is configured to divert the fluid away from the heat exchanger if a second temperature measurement by the battery temperature sensor is higher than or equal to a second temperature measurement by the cabin temperature sensor, and wherein the cabin thermal management system further comprises a supplemental heating, ventilation, and air conditioning system configured to cool the passenger cabin if the second temperature measurement by the battery temperature sensor is higher than or equal to the second temperature measurement by the cabin temperature sensor.

The cabin thermal management system may further include a fan configured to circulate air proximate to the heat exchanger to assist with heating or cooling the passenger cabin.

The above referenced summary section is provided to introduce a selection of concepts in a simplified form that are further described below in the detailed description section. The summary is not intended to identify key features or essential features of the claimed subject matter, nor is it intended to be used to limit the scope of the claimed subject matter. Furthermore, the claimed subject matter is not limited to examples that solve any or all disadvantages noted in any part of this disclosure.

### BRIEF DESCRIPTION OF THE DRAWINGS

Examples of various techniques will hereafter be described with reference to the accompanying drawings. It should be understood, however, that the accompanying drawings illustrate only the various examples described herein and are not meant to limit the scope of various techniques described herein.
Figure 1 illustrates a schematic diagram of an electric aircraft in accordance with examples.
Figure 2 illustrates a schematic diagram of an electric aircraft having a cabin thermal management system in accordance with examples.
Figure 3 illustrates a schematic diagram of a cabin thermal management system in thermal communication with a battery pack in accordance with examples.
Figures 4-5 illustrate plots of cabin temperature and battery temperature over time in accordance with examples.
Figure 6 illustrates a flow diagram of a method for using a cabin thermal management system in accordance with examples.
Figure 7 illustrates a block diagram of a hardware configuration in which one or more various technologies described herein may be incorporated and practiced.

### DETAILED DESCRIPTION

Aspects of the present invention are set out in the appended claims. Dependent claims set out optional features.

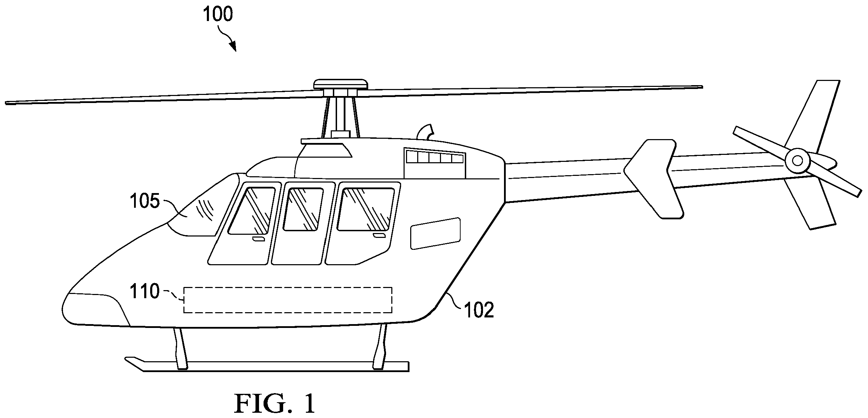

Various examples directed to a cabin thermal management system will now be described in the following paragraphs with reference to Figures 1-7.

As noted above, for an electric aircraft, one or more battery packs are used to provide electric power to one or more electric propulsion systems and other onboard electric components. Such electric propulsion systems may include electrical motors, rotor systems, and/or any other components known to those skilled in the art that may be used to propel the aircraft. The term "electric aircraft" as used herein may refer to an all-electric aircraft, a hybrid aircraft, or the like. A hybrid aircraft may use multiple types of propulsion sources, at least one of which may be the electric propulsion system described above.

For example, Figure 1 illustrates a schematic diagram of an electric aircraft 100 in accordance with examples. As shown, the aircraft 100 may include a fuselage 102 and includes a passenger cabin 105 and a battery pack 110. The aircraft 100 as depicted in Figure 1 is a helicopter, though those skilled in the art will understand that the examples described herein may be applied to any type of aircraft, including, but not limited to, other types of rotorcraft (e.g., gyrocopters), ultralight aircraft, vertical take-off and landing (VTOL) aircraft, sport aviation aircraft, military aircraft, general aviation aircraft, or commercial passenger aircraft. In a further example, the aircraft 100 may be any type of manned aircraft, where the term "manned" as used herein indicates that the aircraft 100 is configured to transport an operator and may also be configured to transport one or more other passengers. The fuselage 102 may be a central main body of the aircraft 100, where the passenger cabin 105 is disposed within the fuselage 102. The passenger cabin 105 may be configured to transport an operator and any other passengers onboard the aircraft 100.

As mentioned above, the battery pack 110 is configured to power one or more electronic components of the aircraft - it may be used to provide electric power to one or more electric propulsion systems (not shown) of the aircraft 100, and it may also be used to provide electric power to any other electric components onboard the aircraft 100. The term "battery pack" may refer to one or more individual batteries contained within a single piece or multi-piece housing, where the individual batteries are electrically interconnected to achieve a desired voltage and capacity for a particular application. The terms "battery", "cell", and "battery cell" may be used interchangeably and may refer to any of a variety of different cell types, chemistries, and configurations, including, but not limited to, lithium ion, lithium iron phosphate, lithium manganese oxide, lithium copper oxide, lithium chromium oxide, lithium cobalt oxide, lithium carbon fluoride, lithium iron disulfide, lithium ion polymer, zinc-carbon, zinc-chloride, alkaline, zinc manganese dioxide, nickel oxyhydroxide, a bio-battery, mercury oxide, zinc-air, silver-oxide, magnesium, a Zamboni pile, nickel cadmium, nickel hydrogen, nickel metal hydride, nickel zinc, silver zinc, lead-acid, a solid state battery, and any other battery type or configuration known to those skilled in the art.

The battery pack 110 may be disposed anywhere on the aircraft 100. In some examples, the battery pack 110 may be disposed in the fuselage 102, and it may be positioned proximate to the cabin 105. For example, as shown in Figure 1, the battery pack 110 may be disposed on a floor of the fuselage 102, such that the battery pack 110 is positioned below the cabin 105. Though Figure 1 illustrates a single battery pack 110, those skilled in the art will understand that the examples described herein may be used with an aircraft 100 having a plurality of battery packs 110. The battery pack 110 may be of any weight or size that can be accommodated by the aircraft 100. In some examples, the battery packs 110 used by the aircraft 100 may have a total weight that is approximately equal to one third of the weight of the aircraft 100.

In addition, the battery pack 110 may be composed of one or more rechargeable batteries configured to be charged, discharged, and then recharged multiple times. The aircraft 100 may include an electric power connector (not shown), such as an electric cable with an attached electrical connector, that can be used to mechanically connect to an external power supply, where the external power supply may supply power for recharging the battery pack 110. In one example, the external power supply may be an independent ground power source provided within a station, aircraft hanger, and the like. In another example, the external power supply may be provided using ground support equipment (e.g., a ground power unit).

As is known in the art, the performance and/or lifetime of the batteries within the battery pack 110 can change depending on the temperatures at which the batteries operate or are stored. In one example, a battery may have a minimum operating temperature, where a battery operating below the minimum operating temperature may offer reduced power or performance to the one or more electric propulsion systems and other electric components of the aircraft 100. Further, a battery may have a maximum operating temperature, where a battery operating above the maximum operating temperature may offer reduced power or performance to the one or more electric propulsion systems and other electric components of the aircraft 100.

As such, during operation of the aircraft 100, a battery may offer normal power or performance if operating within a temperature range that is between the minimum operating temperature and the maximum operating temperature. This temperature range may hereinafter be referred to as an operating temperature range of a battery. The operating temperature range for a particular battery may depend on a number of factors, such as battery chemistry, regulations or guidelines, and the like. In one example, a battery may have an operating temperature range between about 10 degrees Celsius (i.e., a minimum operating temperature) and about 60 degrees Celsius (i.e., a maximum operating temperature).

Accordingly, one or more battery thermal systems (not shown) may be used to maintain the one or more batteries of the battery pack 110 within specified temperature ranges. In particular, as is known in the art, the battery pack 110 may use a battery thermal system to heat or cool the batteries of the battery pack 110 to a desired temperature or temperature range (e.g., the operating temperature range). The battery thermal system may be any system known to those skilled in the art. For example, the battery thermal system may be a fluid heat transfer system used to heat or cool the cells of the battery pack 110 by circulating a fluid through cooling channels adjacent to the cells. The fluid heat transfer system is discussed in further detail below.

In this manner, various examples described herein may include a cabin thermal management system that may be configured to transfer thermal energy between one or more battery packs of an aircraft and a passenger cabin. In particular, the cabin thermal management system may, using the battery thermal system described above, regulate an ambient temperature of the passenger cabin. In such examples, the use of conventional heating, ventilation, and air conditioning (HVAC) systems with respect to the passenger cabin may be reduced or altogether eliminated, thereby decreasing the weight carried by the aircraft and increasing available space onboard.

### Cabin Thermal Management System

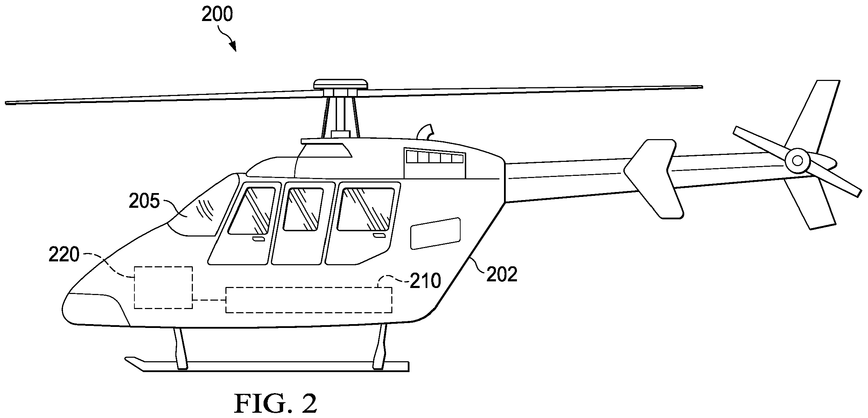

Figure 2 illustrates a schematic diagram of an electric aircraft 200 having a cabin thermal management system 220 in accordance with examples. As shown, the aircraft 200 may include a fuselage 202, and includes a passenger cabin 205 and a battery pack 210. The aircraft 200, the fuselage 202, the passenger cabin 205, and the battery pack 210 may be the same as those described above for the aircraft 100, the fuselage 102, the passenger cabin 105, and the battery pack 110, respectively, of Figure 1. As is also shown, the cabin thermal management system 220 may be disposed within the fuselage 202. In a further example, the cabin thermal management system 220 may be at least partially disposed within the passenger cabin 205.

As mentioned above, the cabin thermal management system 220 is used to transfer thermal energy between the battery pack 210 of the aircraft 200 and the passenger cabin 205. In doing so, the cabin thermal management system 220 is used to regulate an ambient temperature of the passenger cabin 205. An ambient temperature of a passenger cabin may hereinafter be referred to as a cabin temperature.

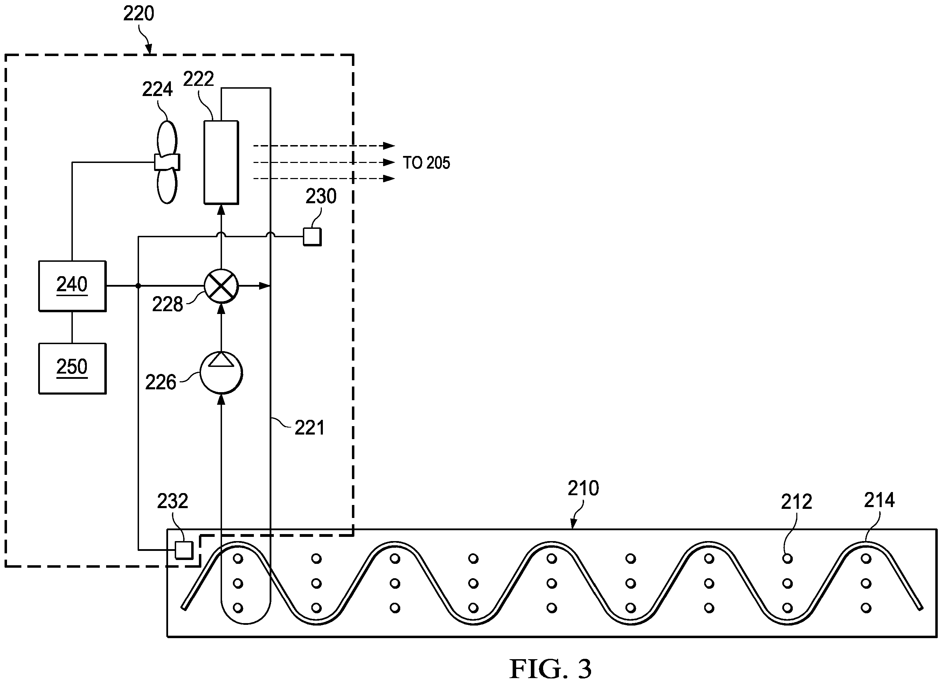

To transfer the thermal energy between the battery pack 210 and the cabin 205, the cabin thermal management system 220 may be in thermal communication with the battery pack 210. In particular, the cabin thermal management system 220 may be in thermal communication with the battery thermal system (not shown) of the battery pack 210. For example, Figure 3 illustrates a schematic diagram of a cabin thermal management system 220 in thermal communication with a battery pack 210 in accordance with examples of various techniques described herein.

As mentioned above, both the cabin thermal management system 220 and the battery pack 210 may be disposed within the fuselage 202. In addition, one or more components (e.g., heat exchanger 222, fan 224, and the like) of the cabin thermal management system 220 may be disposed within or proximate to the passenger cabin 205 (not shown), as further described below. Additionally, the battery pack 210 may be composed of any number of cells 212 arranged in any type of configuration within the pack 210. As such, the battery pack 210 is not limited to the number and configuration of cells 212 shown in Figure 3.

As is also noted above, one or more battery thermal systems may be used to regulate the cells 212 of the battery pack 210 to a specified temperature or temperature range (e.g., an operating temperature range). The one or more battery thermal systems may be any system known to those skilled in the art. In one example, and as shown in Figure 3, the battery thermal system of the battery pack 210 may be a fluid heat transfer system used to heat or cool the cells 212 of the battery pack 210, such as through convective heat transfer, by circulating a fluid through one or more cooling channels 214 adjacent to the cells 212.

The fluid may be any fluid used to regulate temperature that is known to those skilled in the art, including, but not limited to, water, glycol-based liquids (e.g., antifreeze), and/or the like. The cooling channels 214 may be tubing that is at least partially composed of thermally conductive material, such that the tubing is configured to transfer thermal energy between the fluid contained therein and the cells 212. The cooling channels 214 may be arranged in any configuration within the battery pack 210 that is known to those skilled in the art, and is not limited to the arrangement shown in Figure 3.

An external source (not shown) may be connected to the aircraft 200, and to the battery pack 210 in particular, in order to heat or cool the fluid within the channels 214. For example, the external source may be used to heat the fluid in the channels 214, which, in turn, may heat the cells 212 via thermal energy transfer from the fluid. In another example, the external source may be used to cool the fluid in the channels 214, which, in turn, may cool the cells 212 via thermal energy transfer from the cells 212 to the fluid. The external source may include any number of thermal components known to those skilled in the art, including, but not limited to, one or more heat exchangers, a refrigerant, an evaporator, a compressor, a positive thermal coefficient (PTC) heater, a pump to circulate the fluid, and/or any components used in a conventional HVAC system. The external source may be located only on the ground, and thus may be connected to the aircraft 200 only while the aircraft 200 is on the ground or otherwise in storage.

Accordingly, the fluid heat transfer system of the battery pack 210 may be used to regulate the temperature of the cells 212. The temperature of the cells 212 in the battery pack 210 may hereinafter be referred to as the battery temperature. In one example, when the aircraft 200 draws electric power from the battery pack 210, the fluid heat transfer system may be used to regulate the battery temperature to within an operating temperature range of the cells 212. In another example, when the aircraft 200 is in storage or is otherwise not drawing electric power from the battery pack 210, the fluid heat transfer system may be used to regulate the battery temperature to a storage temperature range. The storage temperature range may correspond to a temperature range at which the lifetime of the cells 212 may not be adversely affected over a prolonged period of time. In one example, the cells 210 may have a storage temperature range between about 10 degrees Celsius and 35 degrees Celsius.

In some examples, the battery pack 210 may be preconditioned such that the battery temperature of the cells 212 may be regulated to a particular temperature or temperature range prior to operation of the aircraft 200, such as prior to a particular flight. For example, the battery pack 210 may be preconditioned prior to a flight such that its battery temperature is at or slightly above a minimum operating temperature. Preconditioning the battery pack 210 to such a low temperature may maximize the duration at which the battery pack 210 is operating within its operating temperature range (e.g., during a flight), as its battery temperature may increase while in operation due to the thermal energy being generated by the cells 212. For example, using the fluid heat transfer system, the battery pack 210 may be preconditioned prior to a flight such that its battery temperature is about 10 degrees Celsius. After about thirty minutes of flight time, its battery temperature may increase to about 50 degrees Celsius, at which point the aircraft 200 may land to avoid overheating the battery pack 210.

As mentioned above, to transfer the thermal energy between the battery pack 210 and the cabin 205, the cabin thermal management system 220 may be in thermal communication with the battery pack 210 described above. In particular, the cabin thermal management system 220 may use the battery pack 210, with its battery temperature regulated by the fluid heat transfer system, to serve as a heat source or a heat sink for the passenger cabin 205. The cabin thermal management system 220 can include any components known in the art that are configured to use the battery pack 210 as a heat source or a heat sink for the passenger cabin 205. As such, the cabin thermal management system 220 is not limited to components and configurations illustrated in Figure 3.

The cabin thermal management system 220 includes a thermal loop 221, a heat exchanger 222, may include a fan 224, a pump 226, includes a valve 228 and may include a cabin temperature sensor 230, a battery temperature sensor 232, and a computing system 240. The cabin thermal management system 220 includes a supplemental HVAC system 250, as further described below.

The thermal loop 221 may be coupled to the cooling channels 214 of the battery pack 210, such that the fluid of the cooling channels 214 may also circulate through the thermal loop 221. The thermal loop 221 may be composed of similar tubing used for the cooling channels 214. The thermal loop 221 may be coupled to the pump 226, which may be used to pump the fluid through the thermal loop 221. The pump 226 may be any pump known to those skilled in the art.

The thermal loop 221 is coupled to the valve 228, where the valve 228 may control the amount of fluid being circulated to the heat exchanger 222 that is also coupled to the loop 221. In some instances, the valve 228 is configured to divert some or all of the fluid from cooling channels 214 away from the heat exchanger 222, such that the fluid returns to the battery pack 210. The valve 228 may be any valve known to those skilled in the art. The heat exchanger 222 may be used to transfer thermal energy between the passenger cabin 205 and the fluid circulating through the thermal loop 221, which allows for the heating or cooling of the passenger cabin 205. The heat exchanger 222 may be any heat exchanger known to those skilled in the art. As such, using the fluid of the thermal loop 221 and the channels 214, the heat exchanger 222 may be used to transfer the thermal energy between the cabin 205 and the battery pack 210.

The fan 224 may be used to circulate air over and/or through the heat exchanger 222 to assist with the heating or cooling of the cabin 205, where the fan 224 may be any fan known to those skilled in the art. The cabin thermal management system 220 may also include one or more ducts (not shown) to assist with the flow of heated or cooled air from the heat exchanger 222 to the cabin 205. The fluid from the heat exchanger 222 may flow back to the battery pack 210, where the fluid may circulate through the channels 214 of the pack 210.

The computing system 240 may be in communication with one or more other components of the cabin thermal management system 220. In one example, the computing system 240 may be in communication with the valve 228 and the fan 224, such that the computing system 240 may be used to control the operations of both the valve 228 and the fan 224. The computing system 240 may also be in communication with the cabin temperature sensor 230 and the battery temperature sensor 232, such that it may receive measurements from either sensor. The cabin temperature sensor 230 may be positioned in or proximate to the cabin 205, and may be used to measure its cabin temperature. Similarly, the battery temperature sensor 232 may be positioned in or proximate to the battery pack 210, and may be used to measure its battery temperature. Any sensors known to those skilled in the art may be used for either sensor. Further, the computing system 240 may use any type of communications (e.g., wired or wireless) to communicate with the other components of the cabin thermal management system 220 or any other component of the aircraft 200. In another example, the computing system 240 may be used by one or more other systems (e.g., electric propulsion system, etc.) onboard the aircraft 200. The computing system 240 is described in further detail in a later section.

In operation, the cabin thermal management system 220 may use the above-described components to regulate the cabin temperature of cabin 205. In particular, the cabin thermal management system 220 may use the above-described components to heat or cool the cabin 205 by transferring thermal energy between the cabin 205 and the battery pack 210. Initially, as mentioned above, the battery pack 210 may be preconditioned such that the battery temperature of the cells 212 may be regulated to a particular temperature or temperature range prior to operation of the aircraft 200, such as prior to a particular flight. For example, the battery pack 210 may be preconditioned prior to a flight such that its battery temperature is at or slightly above a minimum operating temperature.

During or after the preconditioning of the battery pack 210, the computing system 240 may receive one or more user inputs indicating that the cabin temperature of cabin 205 is to be regulated. In one example, the computing system 240 may receive a user input indicating that the cabin temperature is to be cooled. For example, the user input may be flipping of a switch or pressing of a button in the aircraft 200 indicating that the cabin 205 is to be cooled.

After receiving the user input, the computing system 240 may receive measurements from the cabin temperature sensor 230 and the battery temperature sensor 232. If the measurements indicate that the battery temperature is lower than the cabin temperature, then the computing system 240 may enter into a cooling mode, where it may operate the valve 228 such that fluid is circulated to the heat exchanger 222 via the thermal loop 221. Given the lower temperature of the battery temperature, the fluid may be cooler relative to the cabin 205.

As such, the heat exchanger 222 may transfer thermal energy away from the atmosphere of the cabin 205 and into the fluid, thereby cooling the atmosphere of the cabin 205. The computing system 240 may operate the fan 224 to blow air over and/or through the heat exchanger 222 to assist with the circulation of cooler air throughout the cabin 205. The fluid from the heat exchanger 222 may return to the battery pack 210 via the thermal loop 221. In such an example, the battery pack 210 may serve as a heat sink for the cabin 205.

However, if the measurements indicate that the battery temperature is higher than or equal to the cabin temperature, then the computing system 240 may not enter into the cooling mode described above. Instead, the computing system 240 may operate the valve 228 such that fluid does not circulate through the heat exchanger 222, and the fluid may return to the battery pack 210 from the valve 228. In such an example, the cabin thermal management system 220 may be unable to cool the passenger cabin 205.

In another example, the computing system 240 may receive a user input indicating that the cabin temperature is to be warmed. For example, the user input may be flipping of a switch or pressing of a button in the aircraft 200 indicating that the cabin 205 is to be warmed. After receiving the user input, the computing system may receive measurements from the cabin temperature sensor 230 and the battery temperature sensor 232. If the measurements indicate that the battery temperature is higher than or equal to the cabin temperature, then the computing system 240 may enter into a heating mode, where it may operate the valve 228 such that fluid is circulated to the heat exchanger 222 via the thermal loop 221. Given the higher temperature of the battery temperature, the fluid may be warmer relative to the cabin 205.

As such, the heat exchanger 222 may transfer thermal energy from the fluid to the cabin 205, thereby warming the atmosphere of the cabin 205. The computing system 240 may operate the fan 224 to blow air over and/or through the heat exchanger 222 to assist with the circulation of warmer air throughout the cabin 205. The fluid from the heat exchanger 222 may return to the battery pack 210 via the thermal loop 221. In such an example, the battery pack 210 may serve as a heat source for the cabin 205.

However, if the measurements indicate that the battery temperature is lower than to the cabin temperature, then the computing system 240 may not enter into the heating mode described above. Instead, the computing system 240 may operate the valve 228 such that fluid does not circulate through the heat exchanger 222, and the fluid may return to the battery pack 210 from the valve 228. In such an example, the cabin thermal management system 220 may be unable to warm the passenger cabin 205.

Other examples for the user inputs mentioned above may be used. In one example, the user input may indicate a maximum cabin temperature level, where the cabin thermal management system 220 is to cool the cabin 205 if a measurement from the cabin temperature sensor 230 indicates that the cabin temperature is higher than the maximum cabin temperature level. For example, the user input may indicate that the maximum cabin temperature level is 25 degrees Celsius. If the computing system 240 receives measurements from the cabin temperature sensor 230 indicating a cabin temperature greater than 25 degrees Celsius, then the computing system may compare measurements from the cabin temperature sensor 230 and the battery temperature sensor 232, and the computing system 240 may enter its cooling mode based on the comparison, as described above.

In a further example, the user input may be a minimum cabin temperature level, where the cabin thermal management system 220 is to warm the cabin 205 if measurement from the cabin temperature sensor 230 indicates that the cabin temperature is lower than the maximum cabin temperature level. For example, the user input may indicate that the minimum cabin temperature level is 20 degrees Celsius. If the computing system 240 receives measurements from the cabin temperature sensor 230 indicating a cabin temperature lower than 20 degrees Celsius, then the computing system may compare measurements from the cabin temperature sensor 230 and the battery temperature sensor 232, and the computing system 240 may enter its heating mode based on the comparison, as described above. In another example, the computing system 240 may compare the cabin temperature to fluid temperature, instead of battery temperature, when determining the operation of the valve 228 for the cooling and heating operations described above.

As mentioned above, the battery pack 210 may be regulated to a particular temperature or temperature range. In one example, the battery pack 210 may be preconditioned or in the process of preconditioning when the cabin thermal management system 220 may begin its operation to cool or warm the cabin 205. For example, the battery pack 210 may be preconditioned prior to a flight such that its battery temperature is at or slightly above a minimum operating temperature.

In such an example, the aircraft 200 may be on the ground, which may allow for the cabin 205 to be warmed or cooled prior to any passengers boarding the aircraft 200.

This may allow for the cabin temperature to reach at a level that is comfortable for the passengers before the aircraft 200 takes off. The cabin thermal management system 220 may also continue to cool or warm the cabin 205 during flight. However, as mentioned above, the cells 212 of the battery pack 210 may generate thermal energy (i.e., heat) when in operation. As such, while the aircraft 200 is on the ground after preconditioning, the battery pack 210 may generate heat as power is being drawn from the pack 210 for the electric components onboard the aircraft 200, where such components may include the cabin thermal management system 220. Moreover, the battery pack 210 may generate even more heat during the takeoff and flight of the aircraft 200, as power may be drawn for the electric propulsion system discussed above and other components. As such, the battery temperature of the pack 210 may increase over time as the aircraft 200 is being operated.

Accordingly, while cooling or warming the cabin 205 during operation of the aircraft 200, the cabin thermal management system 220 may continuously monitor the cabin temperature and the battery temperature via the sensors 230, 232. In one example, while cooling the cabin 205 as described above, the computing system 240 may receive measurements indicating that the battery temperature is higher than or equal the cabin temperature. For instance, the battery temperature may have increased over time due to power being drawn from the battery pack 210. In such an example, the computing system may leave its cooling mode and may operate the valve 228 such that fluid does not circulate through the heat exchanger 222, such that the fluid may return to the battery pack 210 from the valve 228. At that point, the cabin thermal management system 220 may no longer be used to cool the passenger cabin 205. In a further example, the supplemental HVAC system 250 may be used to cool the cabin 205 in instances where the battery pack 210 cannot be used as a heat sink (i.e., the battery temperature is higher than the cabin temperature). The supplemental HVAC system 250 may be similar to conventional HVAC systems, but may be smaller in size and weight. The supplemental HVAC system 250 may be controlled by the computing system 240.

In examples where the cabin thermal management system 220 is used to warm the cabin 205, the increasing battery temperature may be of use in doing so, as the battery pack 210 may serve as a heat source of increasing temperature. In some examples, given the increasing battery temperature and the limited duration at which the cabin thermal management system 220 may cool the cabin 205, the cabin thermal management system 220 may be used primarily with aircrafts 200 used for relatively short trips (e.g., thirty minutes or less).

Once the aircraft 200 has landed, its battery pack 210 may again be preconditioned during or after its recharge, and the cabin 205 may then be warmed or cooled accordingly using the cabin thermal management system 220 prior to the next flight.

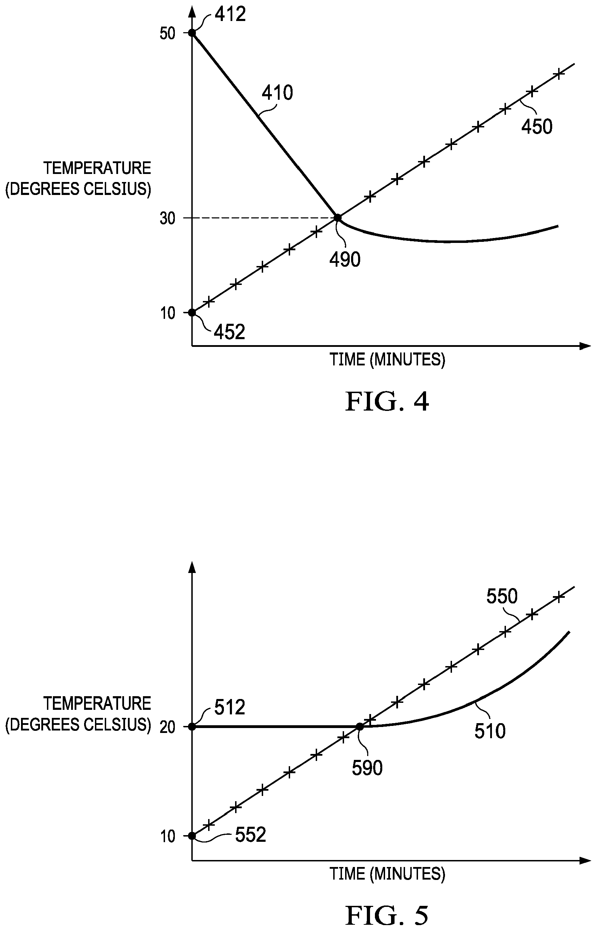

For example, Figure 4 illustrates plots of cabin temperature and battery temperature over time in accordance with examples of various techniques described herein. In particular, plot 410 shows how cabin temperature changes over time when the cabin thermal management system 220 is used to cool the cabin 205, and plot 450 shows how battery temperature changes over time when the cabin thermal management system 220 is used to cool the cabin 205.

As shown at point 452, the battery pack 210 may be preconditioned to approximately 10 degrees Celsius, while the cabin 205 may initially have a cabin temperature of approximately 50 degrees Celsius, as shown at point 412. In addition, the measurements from sensors 230, 232 may initially show the battery temperature as lower than the cabin temperature, so the computing system 240 may enter into a cooling mode and circulate cool air throughout the cabin 205. At that point, the battery pack 210 may serve as a heat sink for the cabin 205.

Accordingly, as shown by plot 410, the cabin temperature may decrease steadily. At the same time, as shown by plot 450, the battery temperature may increase due to power being drawn from the battery pack 210. At point 490, the computing system 240 may receive measurements indicating that the battery temperature is equal to the cabin temperature at approximately 30 degrees Celsius. The computing system may then leave its cooling mode and may operate the valve 228 such that fluid does not circulate through the heat exchanger 222. At that point, the cabin thermal management system 220 may no longer be used to cool the passenger cabin 205. As shown, the battery temperature may continue to increase, as power may continue to be drawn from the battery pack 210. The cabin temperature may no longer steadily decrease, and may plateau for some time before increasing again.

In another example, Figure 5 illustrates plots of cabin temperature and battery temperature over time in accordance with examples of various techniques described herein. In particular, plot 510 shows how cabin temperature changes over time when the cabin thermal management system 220 is used to warm the cabin 205, and plot 550 shows how battery temperature changes over time when the cabin thermal management system 220 is used to warm the cabin 205.

As shown at point 552, the battery pack 210 may be preconditioned to approximately 10 degrees Celsius, while the cabin 205 may initially have a cabin temperature of approximately 20 degrees Celsius, as shown at point 512. In addition, the measurements from sensors 230, 232 may initially show the battery temperature as lower than the cabin temperature, so the computing system 240 may not enter into a heating mode yet.

As shown by plot 510, the cabin temperature may be relatively stable initially. At the same time, as shown by plot 550, the battery temperature may increase due to power being drawn from the battery pack 210. At point 590, the computing system 240 may receive measurements indicating that the battery temperature is equal to the cabin temperature at approximately 20 degrees Celsius. The computing system may then enter into a heating mode and may operate the valve 228 such that fluid is circulated through the heat exchanger 222. At that point, the cabin thermal management system 220 may be used to warm the passenger cabin 205. As shown, the battery temperature may continue to increase, as power may continue to be drawn from the battery pack 210. The cabin temperature may also steadily increase, as the battery pack 210 may serve as a heat source for the cabin 205.

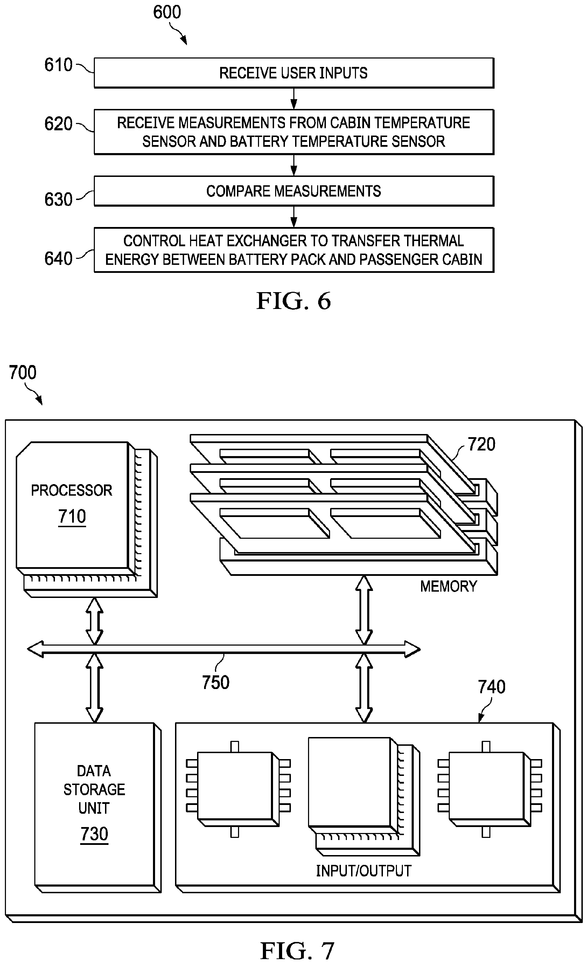

Figure 6 illustrates a flow diagram of a method 600 for using a cabin thermal management system in accordance with examples of various techniques described herein. In one example, method 600 may be at least partially performed by a computing system, such as the computing system 240 discussed above. It should be understood that while method 600 indicates a particular order of execution of operations, in some examples, certain portions of the operations might be executed in a different order. Further, in some examples, additional operations or steps may be added to the method 600. Likewise, some operations or steps may be omitted.

At block 610, the computing system may receive one or more user inputs indicating that a cabin temperature of a passenger cabin of an aircraft is to be regulated. In one example, the computing system may receive a user input indicating that the cabin is to be cooled. In another example, the computing system may receive a user input indicating that the cabin temperature is to be warmed.

The method 600 comprises receiving a first temperature measurement from a cabin temperature sensor disposed in or proximate to a passenger cabin of an aircraft, wherein the cabin temperature sensor is configured to measure a cabin temperature of the passenger cabin and receiving a first temperature measurement from a battery temperature sensor disposed in or proximate to a battery pack of the aircraft, wherein the battery temperature sensor is configured to measure a battery temperature of the battery pack. At block 620, the computing system may receive a first measurement from a cabin temperature sensor and a first measurement from a battery temperature sensor. The cabin temperature sensor is positioned in or proximate to the cabin, and may be used to measure its cabin temperature. Similarly, the battery temperature sensor is positioned in or proximate to a battery pack of the aircraft, and may be used to measure its battery temperature.

The method 600 includes comparing the first temperature measurement from the cabin temperature sensor with the first temperature measurement from the battery temperature sensor. At block 630, the computing system may compare the first measurement from the cabin temperature sensor and the first measurement from the battery temperature sensor. The method 600 includes, based on the comparison, using a cabin thermal management system to regulate the cabin temperature by transferring thermal energy from the battery pack to the passenger cabin. At block 640, based on the comparison, the computing system may control a heat exchanger to transfer thermal energy between the battery pack and the passenger cabin. In one example, if the user input indicates that the cabin is to be cooled, the heat exchanger may transfer thermal energy away from the atmosphere of the cabin and into fluid circulating through the battery pack if the first measurement from the battery temperature sensor is lower than the first measurement from the cabin temperature sensor. In another example, if the user input indicates that the cabin is to be warmed, the heat exchanger may transfer thermal energy from the fluid to the cabin if the first measurement from the battery temperature sensor is higher than the first measurement from the cabin temperature sensor.

In some examples, the cabin thermal management system 220 may operate the valve 228 to transfer thermal energy from the fluid in the thermal loop 221 to the cabin 205 for situations where the battery pack 210 is at risk of overheating, regardless of the cabin temperature or whether the user input indicated that the cabin is to warmed or cooled. Such examples may be used to draw heat away from the overheating battery pack 210. In another example, the thermal loop 221 may be coupled to similar tubing disposed in seats of the cabin 205, thereby allowing fluid to circulate in the tubing of the seats. In such an example, the cabin thermal management system 220 may be used to cool or warm the seats of the cabin 205 in a similar manner as described above with respect to Figures 3-6. In yet another example, the thermal loop 221 may be coupled to similar tubing disposed in the clothing (helmet, flight suits, and/or the like) of an operator or passengers of the cabin 205, thereby allowing fluid to circulate in the tubing of the flight suits. In such an example, the cabin thermal management system 220 may be used to cool or warm the clothing in a similar manner as described above with respect to Figures 3-6.

In sum, examples relating to a cabin thermal management system may be used to reduce the use of conventional HVAC systems by an electric aircraft, thereby decreasing the weight carried by the aircraft, increasing aircraft range, and increasing available space onboard.

### Computing System

Figure 7 illustrates a block diagram of a hardware configuration 700 in which one or more various technologies described herein may be incorporated and practiced. The hardware configuration 700 can be used to implement the computing systems discussed above, such as computing system 240. The hardware configuration 700 can include a processor 710, a memory 720, a storage device 730, and an input/output device 740. Each of the components 710, 720, 730, and 740 can, for example, be interconnected using a system bus 750. The processor 710 can be capable of processing instructions for execution within the hardware configuration 700. In one example, the processor 710 can be a single-threaded processor. In another example, the processor 710 can be a multi-threaded processor. The processor 710 can be capable of processing instructions stored in the memory 720 or on the storage device 730.

The memory 720 can store information within the hardware configuration 700. In one example, the memory 720 can be a computer-readable medium. In one example, the memory 720 can be a volatile memory unit. In another example, the memory 720 can be a non-volatile memory unit.

In some examples, the storage device 730 can be capable of providing mass storage for the hardware configuration 700. In one example, the storage device 730 can be a computer-readable medium. In various different examples, the storage device 730 can, for example, include a hard disk device/drive, an optical disk device, flash memory or some other large capacity storage device. In other examples, the storage device 730 can be a device external to the hardware configuration 700. Various examples for the memory 720 and/or the storage device 730 are further discussed below.

The input/output device 740 can provide input/output operations for the hardware configuration 700. In one example, the input/output device 740 can include one or more display system interfaces, sensors and/or data transfer ports.

The subject matter of this disclosure, and/or components thereof, can be realized by instructions that upon execution cause one or more processing devices to carry out the processes and functions described above. Such instructions can, for example, comprise interpreted instructions, such as script instructions, e.g., JavaScript or ECMAScript instructions, or executable code, or other instructions stored in a computer readable medium.

Examples of the subject matter and the functional operations described in this specification can be provided in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a tangible program carrier for execution by, or to control the operation of, data processing apparatus.

A computer program (also known as a program, software, software application, script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output thereby tying the process to a particular machine, e.g., a machine programmed to perform the processes described herein. The processes and logic flows can also be performed by, and apparatus can also be implemented as, special purpose logic circuitry, e.g., an FPGA (field programmable gate array) or an ASIC (application specific integrated circuit).

Computer readable media (e.g., memory 720 and/or the storage device 730) suitable for storing computer program instructions and data may include all forms of non-volatile memory, media, and memory devices, including, by way of example, any semiconductor memory devices (e.g., EPROM, EEPROM, solid state memory devices, and flash memory devices); any magnetic disks (e.g., internal hard disks or removable disks); any magneto optical disks; and any CD-ROM and DVD-ROM disks. The processor and the memory can be supplemented by, or incorporated in, special purpose logic circuitry.

The discussion above is directed to certain specific examples. It is to be understood that the discussion above is only for the purpose of enabling a person with ordinary skill in the art to make and use any subject matter defined now or later by the patent "claims" found in any issued patent herein.

It is specifically intended that the claimed invention not be limited to the examples and illustrations contained herein, but include modified forms of those examples including portions of the examples and combinations of elements of different examples as come within the scope of the following claims. It should be appreciated that in the development of any such actual example, as in any engineering or design project, numerous example-specific decisions may be made to achieve the developers' specific goals, such as compliance with system-related and business related constraints, which may vary from one example to another. Moreover, it should be appreciated that such a development effort might be complex and time consuming, but would nevertheless be a routine undertaking of design, fabrication, and manufacture for those of ordinary skill having the benefit of this disclosure. Nothing in this application is considered critical or essential to the claimed invention unless explicitly indicated as being "critical" or "essential."

In the above detailed description, numerous specific details were set forth in order to provide a thorough understanding of the present disclosure. However, it will be apparent to one of ordinary skill in the art that the present disclosure may be practiced without these specific details. In other instances, well-known methods, procedures, components, circuits and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the invention. The first object or step, and the second object or step, are both objects or steps, respectively, but they are not to be considered the same object or step.

The terminology used in the description of the present disclosure herein is for the purpose of describing particular examples only and is not intended to be limiting of the present disclosure. As used in the description of the present disclosure and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. As used herein, the terms "up" and "down"; "upper" and "lower"; "upwardly" and downwardly"; "below" and "above"; and other similar terms indicating relative positions above or below a given point or element may be used in connection with some examples of various technologies described herein.

While the foregoing is directed to examples of various technologies described herein, other and further examples may be devised without departing from the basic scope thereof. Although the subject matter has been described in language specific to structural features and/or methodological acts, it is to be understood that the subject matter defined in the appended claims is not limited to the specific features or acts described above. Rather, the specific features and acts described above are disclosed as example forms of implementing the claims.

## Claims

1. An aircraft (200), comprising:
a passenger cabin (205) configured to transport one or more passengers;
a battery pack (210) configured to power one or more electronic components of the aircraft (200); and
a cabin thermal management system (220) configured to regulate a cabin temperature of the passenger cabin (205) by transferring thermal energy from the battery pack (210) to the passenger cabin (205),
wherein the cabin thermal management system (220) further comprises a valve (228) coupled to a thermal loop (221),
a heat exchanger (222) coupled to the thermal loop (221), disposed in or proximate to the passenger cabin (205) and configured to transfer the thermal energy between the battery pack (210) and the passenger cabin (205);
wherein the cabin thermal management system (220) is configured to receive a user input that the passenger cabin is to be cooled (205);
wherein the thermal loop (221) is coupled to one or more channels (214) of the battery pack (210), wherein the thermal loop (221) is configured to allow fluid from the one or more channels (214) to circulate therein; and
wherein the valve (228) is configured to divert the fluid toward the heat exchanger (222) if a first temperature measurement by a battery temperature sensor (232) is lower than a first temperature measurement by a cabin temperature sensor (230),
wherein the valve (228) is configured to divert the fluid away from the heat exchanger (222) if a second temperature measurement by the battery temperature sensor (232) is higher than or equal to a second temperature measurement by the cabin temperature sensor (230), and
wherein the cabin thermal management system (220) further comprises a supplemental heating, ventilation, and air conditioning system (250) configured to cool the passenger cabin (205) if the second temperature measurement by the battery temperature sensor (232) is higher than or equal to the second temperature measurement by the cabin temperature sensor (230).

2. The aircraft (200) of claim 1, wherein the cabin thermal management system (220) further comprises a fan (224) configured to circulate air proximate to the heat exchanger (222) to assist with heating or cooling the passenger cabin (205)

3. The aircraft (200) of claim 1, wherein the battery pack (210) comprises one or more batteries (212) preconditioned to a predetermined battery temperature.

4. The aircraft (200) of any preceding claim, wherein the cabin thermal management system (220) is configured to use the battery pack (210) as a heat source or a heat sink for the passenger cabin (205).

5. The aircraft (200) of claim 1 or 2, wherein the cabin thermal management system (220) further comprises a pump (226) configured to pump the fluid within the thermal loop (221).

6. The aircraft of claim 1 or 2, wherein the
cabin temperature sensor (230) is disposed in or proximate to the passenger cabin (205), wherein the cabin temperature sensor (230) is configured to measure the cabin temperature; and
the battery temperature sensor (232) is disposed in or proximate to the battery pack (210), wherein the battery temperature sensor (232) is configured to measure a battery temperature of the battery pack (210).

7. The aircraft (200) of claim 1, wherein:
the valve (228) is configured to divert the fluid away from the heat exchanger (222) if a first temperature measurement by the battery temperature sensor (232) is higher than or equal to a first temperature measurement by the cabin temperature sensor (230), wherein the heat exchanger (222) is unable to transfer the thermal energy between the battery pack (210) and the passenger cabin (205) using the fluid.

8. The aircraft (200) of claim 7, wherein:
the valve (228) is configured to divert the fluid toward the heat exchanger (222) if a first temperature measurement by the battery temperature sensor (232) is higher than or equal to a first temperature measurement by the cabin temperature sensor (230), wherein the heat exchanger (222) is configured to transfer the thermal energy between the battery pack (210) and the passenger cabin (205) using the fluid.

9. The aircraft (200) of any of claims 7 to 8, wherein:
the valve (228) is configured to divert the fluid away from the heat exchanger (222) if a first temperature measurement by the battery temperature sensor (232) is lower than a first temperature measurement by the cabin temperature sensor (230), wherein the heat exchanger (222) is unable to transfer the thermal energy between the battery pack (210) and the passenger cabin (205) using the fluid.

10. A method (600), comprising:
receiving a first temperature measurement from a cabin temperature sensor disposed in or proximate to a passenger cabin of an aircraft, wherein the cabin temperature sensor is configured to measure a cabin temperature of the passenger cabin;
receiving a first temperature measurement from a battery temperature sensor disposed in or proximate to a battery pack of the aircraft, wherein the battery temperature sensor is configured to measure a battery temperature of the battery pack;
comparing the first temperature measurement from the cabin temperature sensor with the first temperature measurement from the battery temperature sensor; and
based on the comparison, using a cabin thermal management system to regulate the cabin temperature by transferring thermal energy from the battery pack to the passenger cabin (640);
diverting the fluid toward a heat exchanger if the first temperature measurement by the battery temperature sensor is lower than the first temperature measurement by the cabin temperature sensor, and diverting the fluid away from the heat exchanger if the first temperature measurement by the battery temperature sensor is higher than or equal to the first temperature measurement by the cabin temperature sensor,
and
cooling the passenger cabin by means of a supplemental heating, ventilation, and air conditioning system if a second temperature measurement by the battery temperature sensor is higher than or equal to a second temperature measurement by the cabin temperature sensor.

11. The method (600) of claim 10, wherein using the cabin thermal management system comprises using the battery pack as a heat source or a heat sink for the passenger cabin; and
wherein using the cabin thermal management system optionally comprises controlling a heat exchanger to transfer the thermal energy between the battery pack and the passenger cabin, wherein the heat exchanger is coupled to a thermal loop coupled to one or more channels of the battery pack.

## Patentansprüche

1. Luftfahrzeug (200), umfassend:
einen Fluggastkabine (205), die zum Transport eines oder mehrerer Fluggäste ausgelegt ist;
einen Batteriesatz (210), der dafür ausgelegt ist, eine oder mehrere elektronische Komponenten des Luftfahrzeugs (200) mit Strom zu versorgen; und
ein Kabinenwärmeverwaltungssystem (220), das dafür ausgelegt ist, eine Kabinentemperatur der Fluggastkabine (205) durch Übertragen von Wärmeenergie vom Batteriesatz (210) an die Fluggastkabine (205) zu regulieren,
wobei das Kabinenwärmeverwaltungssystem (220) ferner ein Ventil (228) umfasst, das mit einem Wärmekreislauf (221) gekoppelt ist,
einen Wärmetauscher (222), der mit dem Wärmekreislauf (221) gekoppelt ist, in oder in der Nähe der Fluggastkabine (205) eingerichtet und dafür ausgelegt ist, die Wärmeenergie zwischen dem Batteriesatz (210) und der Fluggastkabine (205) zu übertragen;
wobei das Kabinenwärmeverwaltungssystem (220) dafür ausgelegt ist, eine Benutzereingabe dafür zu empfangen, dass die Fluggastkabine gekühlt werden soll (205);
wobei der Wärmekreislauf (221) mit einem oder mehreren Kanälen (214) des Batteriesatzes (210) gekoppelt ist, wobei der Wärmekreislauf (221) dafür ausgelegt ist, dass Fluid aus dem einen oder den mehreren Kanälen (214) darin zirkulieren kann; und
wobei das Ventil (228) dafür ausgelegt ist, das Fluid zum Wärmetauscher (222) hin zu leiten, wenn ein erster Temperaturmesswert von einem Batterietemperatursensor (232) niedriger ist als ein erster Temperaturmesswert von einen Kabinentemperatursensor (230),
wobei das Ventil (228) dafür ausgelegt ist, das Fluid vom Wärmetauscher (222) weg zu leiten, wenn ein zweiter Temperaturmesswert vom Batterietemperatursensor (232) höher als oder gleich einem zweiten Temperaturmesswert vom Kabinentemperatursensor (230) ist, und
wobei das Kabinenwärmeverwaltungssystem (220) ferner ein zusätzliches Heizungs-, Belüftungs- und Klimatisierungssystem (250) umfasst, das dafür ausgelegt ist, die Fluggastkabine (205) zu kühlen, wenn der zweite Temperaturmesswert vom Batterietemperatursensor (232) höher oder gleich dem zweiten Temperaturmesswert vom Kabinentemperatursensor (230) ist.

2. Luftfahrzeug (200) nach Anspruch 1, wobei das Kabinenwärmeverwaltungssystem (220) ferner ein Gebläse (224) umfasst, das dafür ausgelegt ist, Luft in der Nähe des Wärmetauschers (222) zum Unterstützen des Heizens oder des Kühlens der Fluggastkabine (205) zirkulieren zu lassen.

3. Luftfahrzeug (200) nach Anspruch 1, wobei der Batteriesatz (210) eine oder mehrere Batterien (212) umfasst, die auf eine vorbestimmte Batterietemperatur vorkonditioniert sind.

4. Luftfahrzeug (200) nach einem der vorhergehenden Ansprüche, wobei das Kabinenwärmeverwaltungssystem (220) dafür ausgelegt ist, den Batteriesatz (210) als Wärmequelle oder Wärmesenke für die Fluggastkabine (205) zu verwenden.

5. Luftfahrzeug (200) nach Anspruch 1 oder 2, wobei das Kabinenwärmeverwaltungssystem (220) ferner eine Pumpe (226) umfasst, die dafür ausgelegt ist, das Fluid innerhalb des Wärmekreislaufs (221) zu fördern.

6. Luftfahrzeug nach Anspruch 1 oder 2, wobei:
der Kabinentemperatursensor (230) in oder in der Nähe der Fluggastkabine (205) eingerichtet ist, wobei der Kabinentemperatursensor (230) zum Messen der Kabinentemperatur ausgelegt ist; und
der Batterietemperatursensor (232) im oder in der Nähe des Batteriesatzes (210) eingerichtet ist, wobei der Batterietemperatursensor (232) zum Messen einer Batterietemperatur des Batteriesatzes (210) ausgelegt ist.

7. Luftfahrzeug (200) nach Anspruch 1, wobei:
das Ventil (228) dafür ausgelegt ist, das Fluid vom Wärmetauscher (222) weg zu leiten, wenn ein erster Temperaturmesswert vom Batterietemperatursensor (232) höher oder gleich einem ersten Temperaturmesswert vom Kabinentemperatursensor (230) ist, wobei der Wärmetauscher (222) nicht in der Lage ist, die Wärmeenergie zwischen dem Batteriesatz (210) und der Fluggastkabine (205) unter Verwendung des Fluids zu übertragen.

8. Luftfahrzeug (200) nach Anspruch 7, wobei:
das Ventil (228) dafür ausgelegt ist, das Fluid zum Wärmetauscher (222) hin zu leiten, wenn ein erster Temperaturmesswert vom Batterietemperatursensor (232) höher oder gleich einem ersten Temperaturmesswert vom Kabinentemperatursensor (230) ist, wobei der Wärmetauscher (222) dafür ausgelegt ist, die Wärmeenergie zwischen dem Batteriesatz (210) und der Fluggastkabine (205) unter Verwendung des Fluids zu übertragen.

9. Luftfahrzeug (200) nach einem der Ansprüche 7 bis 8, wobei:
das Ventil (228) dafür ausgelegt ist, das Fluid vom Wärmetauscher (222) weg zu leiten, wenn ein erster Temperaturmesswert vom Batterietemperatursensor (232) niedriger als ein erster Temperaturmesswert vom Kabinentemperatursensor (230) ist, wobei der Wärmetauscher (222) nicht in der Lage ist, die Wärmeenergie zwischen dem Batteriesatz (210) und der Fluggastkabine (205) unter Verwendung des Fluids zu übertragen.

10. Verfahren (600), umfassend:
Empfangen eines ersten Temperaturmesswerts von einem Kabinentemperatursensor, der in oder in der Nähe einer Fluggastkabine eines Luftfahrzeugs eingerichtet ist, wobei der Kabinentemperatursensor dafür ausgelegt ist, eine Kabinentemperatur der Fluggastkabine zu messen;
Empfangen eines ersten Temperaturmesswerts von einem Batterietemperatursensor, der im oder in der Nähe eines Batteriesatzes des Luftfahrzeugs eingerichtet ist, wobei der Batterietemperatursensor dafür ausgelegt ist, eine Batterietemperatur des Batteriesatzes zu messen;
Vergleichen des ersten Temperaturmesswerts vom Kabinentemperatursensor mit dem ersten Temperaturmesswert vom Batterietemperatursensor; und
auf der Grundlage des Vergleichs, Verwenden eines Kabinenwärmeverwaltungssystems zum Regeln der Kabinentemperatur durch Übertragen von Wärmeenergie vom Batteriesatz an die Fluggastkabine (640);
Leiten des Fluids hin zu einem Wärmetauscher, wenn der erste Temperaturmesswert vom Batterietemperatursensor niedriger ist als der erste Temperaturmesswert vom Kabinentemperatursensor, und
Leiten des Fluids weg vom Wärmetauscher, wenn der erste Temperaturmesswert vom Batterietemperatursensor höher als oder gleich dem ersten Temperaturmesswert vom Kabinentemperatursensor ist, und
Kühlen der Fluggastkabine mittels eines zusätzlichen Heizungs-, Belüftungs- und Klimatisierungssystems, wenn ein zweiter Temperaturmesswert vom Batterietemperatursensors höher oder gleich einem zweiten Temperaturmesswert vom Kabinentemperatursensor ist.

11. Verfahren (600) nach Anspruch 10, wobei das Verwenden des Kabinenwärmeverwaltungssystems das Verwenden des Batteriesatzes als Wärmequelle oder Wärmesenke für die Fluggastkabine umfasst; und
wobei das Verwenden des Kabinenwärmeverwaltungssystems optional das Steuern eines Wärmetauschers zum Übertragen der Wärmeenergie zwischen dem Batteriesatz und der Fluggastkabine umfasst, wobei der Wärmetauscher mit einem Wärmekreislauf gekoppelt ist, der mit einem oder mehreren Kanälen des Batteriesatzes gekoppelt ist.

## Revendications

1. Aéronef (200), comprenant :
une cabine passagers (205) configurée pour transporter un ou plusieurs passagers ;
un bloc de batteries (210) configuré pour alimenter un ou plusieurs composants électroniques de l'aéronef (200) ; et
un système de gestion thermique de cabine (220) configuré pour réguler une température de cabine de la cabine passagers (205) en transférant de l'énergie thermique du bloc de batteries (210) à la cabine passagers (205),
le système de gestion thermique de cabine (220) comprenant en outre une valve (228) couplée à une boucle thermique (221),
un échangeur de chaleur (222) couplé à la boucle thermique (221), disposé dans, ou à proximité de, la cabine passagers (205) et configuré pour transférer l'énergie thermique entre le bloc de batteries (210) et la cabine passagers (205) ;
le système de gestion thermique de cabine (220) étant configuré pour recevoir une entrée utilisateur indiquant que la cabine passagers doit être refroidie (205) ;
la boucle thermique (221) étant couplée à un ou plusieurs canaux (214) du bloc de batteries (210), la boucle thermique (221) étant configurée pour permettre à du fluide provenant des un ou plusieurs canaux (214) de circuler à l'intérieur ; et
la valve (228) étant configurée pour dévier le fluide vers l'échangeur thermique (222) si une première mesure de température par un capteur de température de batterie (232) est inférieure à une première mesure de température par un capteur de température de cabine (230),
la valve (228) étant configurée pour dévier le fluide à l'écart de l'échangeur de chaleur (222) si une deuxième mesure de température par le capteur de température de batterie (232) est supérieure ou égale à une deuxième mesure de température par le capteur de température de cabine (230), et
le système de gestion thermique de cabine (220) comprenant en outre un système de chauffage, de ventilation et de climatisation supplémentaire (250) configuré pour refroidir la cabine passagers (205) si la deuxième mesure de température par le capteur de température de batterie (232) est supérieure ou égale à la deuxième mesure de température par le capteur de température de cabine (230).

2. Aéronef (200) selon la revendication 1, dans lequel le système de gestion thermique de cabine (220) comprend en outre un ventilateur (224) configuré pour faire circuler de l'air à proximité de l'échangeur de chaleur (222) afin d'aider à chauffer ou à refroidir la cabine passagers (205).

3. Aéronef (200) selon la revendication 1, dans lequel le bloc de batteries (210) comprend une ou plusieurs batteries (212) préconditionnées à une température de batterie prédéterminée.

4. Aéronef (200) selon l'une quelconque des revendications précédentes, dans lequel le système de gestion thermique de cabine (220) est configuré pour utiliser le bloc de batteries (210) comme une source de chaleur ou un puits de chaleur pour la cabine passagers (205) .

5. Aéronef (200) selon la revendication 1 ou la revendication 2, dans lequel le système de gestion thermique de cabine (220) comprend en outre une pompe (226) configurée pour pomper le fluide à l'intérieur de la boucle thermique (221).

6. Aéronef selon la revendication 1 ou la revendication 2, dans lequel
le capteur de température de cabine (230) est disposé dans, ou à proximité de, la cabine passagers (205), le capteur de température de cabine (230) étant configuré pour mesurer la température de cabine ; et
le capteur de température de batterie (232) est disposé dans le, ou à proximité du, bloc de batteries (210), le capteur de température de batterie (232) étant configuré pour mesurer une température de batterie du bloc de batteries (210).

7. Aéronef (200) selon la revendication 1, dans lequel : la valve (228) est configurée pour dévier le fluide à l'écart de l'échangeur de chaleur (222) si une première mesure de température par le capteur de température de batterie (232) est supérieure ou égale à une première mesure de température par le capteur de température de cabine (230), l'échangeur de chaleur (222) étant incapable de transférer l'énergie thermique entre le bloc de batteries (210) et la cabine passagers (205) à l'aide du fluide.

8. Aéronef (200) selon la revendication 7, dans lequel : la valve (228) est configurée pour dévier le fluide vers l'échangeur de chaleur (222) si une première mesure de température par le capteur de température de batterie (232) est supérieure ou égale à une première mesure de température par le capteur de température de cabine (230), l'échangeur de chaleur (222) étant configuré pour transférer l'énergie thermique entre le bloc de batteries (210) et la cabine passagers (205) à l'aide du fluide.

9. Aéronef (200) selon l'une quelconque des revendications 7 à 8, dans lequel :
la valve (228) est configurée pour dévier le fluide à l'écart de l'échangeur de chaleur (222) si une première mesure de température par le capteur de température de batterie (232) est inférieure à une première mesure de température par le capteur de température de cabine (230), l'échangeur de chaleur (222) étant incapable de transférer l'énergie thermique entre le bloc de batteries (210) et la cabine passagers (205) à l'aide du fluide.

10. Procédé (600), comprenant :
la réception d'une première mesure de température provenant d'un capteur de température de cabine disposé dans une, ou à proximité d'une, cabine de passagers d'un aéronef, le capteur de température de cabine étant configuré pour mesurer une température de cabine de la cabine de passagers ;
la réception d'une première mesure de température provenant d'un capteur de température de batterie disposé dans un, ou à proximité d'un, bloc de batteries de l'aéronef, le capteur de température de batterie étant configuré pour mesurer une température de batterie du bloc de batteries ;
la comparaison de la première mesure de température provenant du capteur de température de cabine avec la première mesure de température provenant du capteur de température de batterie ; et
sur la base de la comparaison, utiliser un système de gestion thermique de cabine pour réguler la température de cabine en transférant l'énergie thermique du bloc de batteries à la cabine passagers (640) ;
la déviation du fluide vers un échangeur de chaleur si la première mesure de température par le capteur de température de batterie est inférieure à la première mesure de température par le capteur de température de cabine, et
la déviation du fluide à l'écart d'un échangeur de chaleur si la première mesure de température par le capteur de température de batterie est supérieure ou égale à la première mesure de température par le capteur de température de cabine, et
le refroidissement de la cabine passagers au moyen d'un système de chauffage, de ventilation et de climatisation supplémentaire si une deuxième mesure de température par le capteur de température de batterie est supérieure ou égale à une deuxième mesure de température par le capteur de température de cabine.

11. Procédé (600) selon la revendication 10, dans lequel l'utilisation du système de gestion thermique de cabine comprend l'utilisation du bloc de batteries en tant que source de chaleur ou puits de chaleur pour la cabine passagers ; et
dans lequel l'utilisation du système de gestion thermique de cabine comprend facultativement le fait de commande un échangeur de chaleur pour transférer l'énergie thermique entre le bloc de batteries et la cabine, l'échangeur de chaleur étant couplé à une boucle thermique couplée à un ou plusieurs canaux du bloc de batteries.
